# FASCICULE DE BREVET EUROPEEN

(11) **EP 0 693 344 B1**
(45) Date de publication et mention de la délivrance du brevet: **20.05.1998**
(21) Numéro de dépôt: 95401692.9
(22) Date de dépôt: 17.07.1995
(51) Int. Cl.: B23K 26/08, G02B 6/44

(54) **Procédé et ligne de réparation d'un défaut de fermeture d'un tube métallique contenant au moins une fibre optique de transmission**
Verfahren und Reparaturlinie für Verschlussfehler eines metallischen Rohres welches wenigstens eine optische Übertragungsfaser enthält
Process and repair line for a seal fault on a metallic tube containing at least an optical transmission fiber

(30) Priorité: 22.07.1994 FR 9409104
(43) Date de publication de la demande: 24.01.1996
(73) Titulaire: ALCATEL ALSTHOM COMPAGNIE GENERALE D'ELECTRICITE, 75008 Paris (FR)
(72) Inventeur: Marlier, Gery, F-62100 Calais (FR); Fasquel, Didier, F-62100 Calais (FR)
(74) Mandataire: Buffière, Michelle

(56) Documents cités:
- EP-A- 0 456 836
- FR-A- 2 660 225
- FR-A- 2 677 137
- US-A- 4 580 874
- PATENT ABSTRACTS OF JAPAN vol. 010 no. 234 (M-507) ,14 Août 1986 & JP-A-61 067586 (FURUKAWA ELECTRIC CO LTD:THE) 7 Avril 1986,

## Description

La présente invention porte sur un procédé et une ligne de réparation d'un défaut de fermeture d'un tube métallique contenant au moins une fibre optique de transmission.

Les fibres optiques de transmission, notamment d'un câble optique sous-marin, sont contenues dans un ou plusieurs tubes métalliques, par exemple en acier, assurant une protection mécanique étanche autour des fibres dans la structure du câble.

L'opération de mise sous tube métallique d'une fibre optique est en tant que telle connue et décrite notamment dans le document EP-A-O299123. Elle est réalisée en continu sur une ligne de mise sous tube. Elle consiste à déformer un ruban métallique plat pour le mettre en forme de tube ouvert longitudinalement, à guider la fibre dans le tube ouvert et à fermer en long le tube par soudure au laser des bords de l'ouverture. Un tube auxiliaire pénètre dans le tube métallique ouvert et s'étend dans ce dernier au-delà du laser. Il assure l'introduction et le guidage de la fibre dans ce tube métallique.

Cette opération est en général suivie d'un contrôle de fermeture correcte du tube métallique pour l'obtention de la protection souhaitée de la fibre. Ce contrôle permet une détection des éventuels défauts de fermeture le long du tube et une mémorisation de leur position, pour la réparation de ces défauts ultérieurement.

La réparation d'un défaut de fermeture de ce tube peut être réalisée par un manchonnage extérieur de la zone défectueuse. Elle entraîne un surdimensionnement local du tube réparé, qui est souvent incompatible avec son utilisation, en particulier dans la structure d'un câble sous-marin.

Une telle réparation peut également être effectuée en sectionnant le tube métallique et la fibre de part et d'autre de la zone défectueuse ainsi l'éliminée et en réalisant une jonction.

Le document US-A-5 076 657 décrit une telle jonction, sans surdimensionnement résultant du tube à ce niveau. Une telle jonction est réalisée à l'aide d'un manchon de protection des extrémités de la fibre sectionnée, qui ont été soudées l'une à l'autre, et de continuité du tube sectionné. Ce manchon est soudé sur les deux parties terminales à raccorder de ce tube et est ramené mécaniquement au même diamètre extérieur que le tube. Elle peut également être réalisée sans manchon, en réduisant le diamètre extérieur de l'une des parties terminales du tube sectionné, en enfilant cette partie terminale dans l'autre et en les soudant. Dans une telle jonction, les dimensions intérieures du tube réparé sont réduites au niveau des parties se recouvrant l'une l'autre.

Ces modes de réparation connus sont longs et délicats. Ils risquent d'endommager la fibre intérieure. En outre, un même tube métallique contient souvent plusieurs fibres optiques de transmission, qui rendent plus longue et plus délicate une telle réparation du défaut de fermeture du tube métallique.

Le document JP-A-61-67586 décrit un procédé de réparation d'un défaut de fermeture d'un tube métallique contenant au moins une fibre optique de transmission, ledit défaut étant situé sur une génératrice dite de fermeture dudit tube, consistant à réaliser une soudure laser sur ledit défaut, avec un apport d'énergie thermique ajusté à la valeur sensiblement requise pour la soudure.

La présente invention a pour but d'éviter les inconvénients précités, en réalisant la réparation de manière rapide, aisée et sûre, sans modifier les dimensions externes et/ou internes du tube, et en minimisant les risques de dégrader les caractéristiques de transmission de la ou des fibres intérieures.

Elle a pour objet un procédé de réparation d'un défaut de fermeture d'un tube métallique contenant au moins une fibre optique de transmission, ledit défaut étant situé sur une génératrice dite de fermeture dudit tube, consistant à cambrer et mettre sous tension mécanique une portion dudit tube incluant ledit défaut, en rendant convexe la génératrice de fermeture pour forcer à ce niveau chaque fibre intérieure à se positionner contre ledit tube à l'opposé dudit défaut, et à réaliser une soudure laser point par point sur ledit défaut, avec un apport d'énergie thermique en chaque point ajusté à la valeur sensiblement minimale requise pour la soudure.

Elle a également pour objet une ligne de réparation pour la mise en oeuvre du procédé selon l'invention, comportant deux postes de chargement d'une bobine émettrice et d'une bobine réceptrice dudit tube, respectivement, un moyen d'entraînement dudit tube, selon une trajectoire dite directe entre lesdites bobines, couplé à un ensemble de commande d'avance et d'arrêt dudit tube sur ladite trajectoire, et un poste de réparation monté décalé par rapport à ladite trajectoire sur un chemin dévié dit de réparation, ledit poste de réparation comportant un laser de soudure point par point et un ensemble de conditionnement du tube pour son cambrage et sa mise en tension mécanique en regard dudit laser.

Cette ligne de réparation présente avantageusement en outre au moins l'une des caractéristiques additionnelles suivantes :
- l'ensemble de conditionnement comporte une pièce d'appui dudit tube, présentant une face dite frontale, de forme longitudinale sensiblement convexe, et un premier et un deuxième moyen de guidage et de tension dudit tube, montés de part et d'autre de ladite pièce d'appui en définissant avec ladite pièce d'appui ledit chemin de réparation;
- lesdits premier et deuxième moyens de guidage et de tension sont montés mobiles l'un relativement à l'autre sur ledit chemin de réparation, selon une direction X définie par le chemin;
- ladite ligne comporte en outre au moins un premier dispositif d'entraînement en translation selon la direction X, relié auxdits premier et deuxième moyens de guidage et de tension;
- ladite ligne comporte un premier support, dit tablette motorisée, couplé à un deuxième dispositif d'entraînement en translation selon la direction X et portant d'une part chaque premier dispositif monté fixe sur ladite tablette motorisée et d'autre part ladite pièce d'appui, et un deuxième support, dit support principal fixe, portant lesdits premier et deuxième moyens de guidage et de tension montés mobiles selon la direction X et portant également ladite tablette motorisée, le deuxième dispositif étant de préférence un moteur pas à pas;
- ladite ligne comporte en outre un troisième support dit plateau, monté mobile selon une direction Y transversale à la direction X sur ladite tablette motorisée, actionné selon la direction Y par un troisième dispositif d'entraînement et portant ledit moyen de cambrage, ce troisième dispositif étant de préférence une vis micrométrique.

Les caractéristiques et avantages de la présente invention ressortiront de la description fait ci-après d'un mode de réalisation donné à titre d'exemple et illustré dans les dessins ci-annexés. Dans ces dessins :
- les figures 1 et 2 sont deux vues schématiques de face et de dessus d'une ligne de réparation selon la présente invention,
- les figures 3 et 4 sont deux vues partielles et schématiques de face et de dessus d'un poste de réparation de cette ligne.

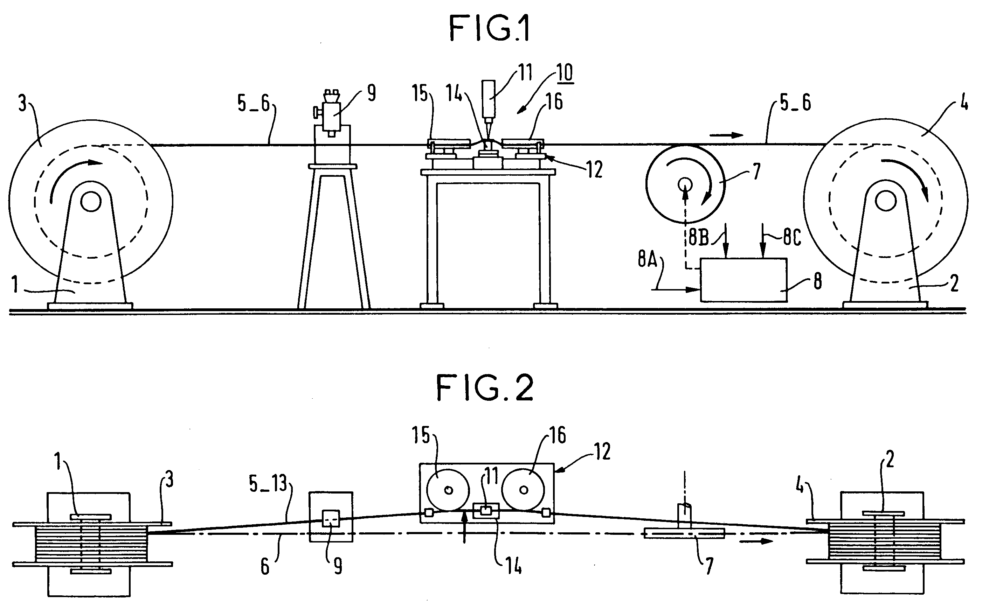

En regard des figures 1 et 2, on voit que la ligne de réparation comporte deux postes 1 et 2 de chargement d'une bobine émettrice 3 et d'une bobine réceptrice 4 d'un tube métallique 5 contenant au moins une fibre optique de transmission, non visible. Ces deux bobines définissent entre elles une trajectoire 6 de défilement direct du tube à réparer, prélevé de la bobine 2 et stocké après réparation des défauts sur la bobine 4. Un cabestan de tirage 7 assure l'avance du tube sur cette trajectoire 6. Il est couplé à un ensemble de commande 8 pour l'entraînement du tube prelevé de la bobine 3 et l'arrêt lors d'un défaut sur le tube.

Ce tube sur la bobine 2 a précédemment été fermé autour des fibres le long d'une génératrice de fermeture. Les défauts à réparer correspondent à une fermeture locale imparfaite de ce tube.

L'ensemble 8 est couplé à une liaison extérieure 8A, lui transmettant les positions le long du tube stocké sur la bobine 3 des différents défauts, précédemment détectés lors de la mise sous ce tube métallique de la ou des fibres optiques intérieures, dont les positions le long du tube ont été mémorisées dans une unité de mémoire associée à cet ensemble et non représentée. Il arrête le tube à chaque défaut de fermeture sur la portion de tube située entre les bobines 3 et 4.

La ligne comporte un poste 9 d'observation des défauts, situé en aval de la bobine émettrice, et un poste de réparation, situé entre le poste d'observation et le cabestan de tirage 7 mais prévu en retrait sur la trajectoire 6 de défilement direct du tube. Le tube est positionné à la main par l'opération dans chacun de ces postes.

Le poste d'observation 9 comprend un microscope permettant à un opérateur de juger de la faisabilité de la réparation du défaut observé. Il lui correspond, de préférence, une entrée 8B de validation d'exécution de la réparation et/ou une entrée 8C d'annulation de la réparation sur l'ensemble de commande 8, ou en variante sur l'unité de mémoire associée. Le signal de validation prolonge l'arrêt du tube alors libre sur la trajectoire 6, en vue de la réparation qui va être réalisée. Le signal d'annulation provoque l'entraînement du tube, sans réparer ce défaut, et permet le maintien en mémoire de la position du défaut non réparé.

Le poste de réparation 10 comporte un laser de soudure point par point 11 et un ensemble 12 de conditionnement du tube 5 en regard du laser 11. Le laser 11 et l'ensemble 12 sont de part et d'autre d'un chemin dévié dit chemin de réparation 13, le laser 11 étant au-dessus de ce chemin et l'ensemble 12 au-dessous. Ce chemin est dans cette réalisation à l'arrière de la trajectoire 6.

L'ensemble 12 comporte principalement un moyen de cambrage 14 du tube 5 en regard du laser 11 et deux moyens de guidage et de mise en tension 15 et 16 du tube sur le moyen de cambrage, qui définissent tous trois entre eux le chemin de réparation 13.

Lors d'un défaut à réparer, le tube 5 non entraîné est libre sur la trajectoire 6. Il est saisi et dévié à la main de la trajectoire 6 sur le chemin de réparation 13 comme représenté dans la figure 2, le défaut étant sous le laser. Il est alors tendu sur le chemin, par les moyens de guidage et de mise en tension 15 et 16. Dans la portion cambrée sous le laser les fibres intérieures se trouvent plaquées contre la paroi du tube, à l'opposé du défaut et du laser, et sont ainsi éloignées le plus possible du laser.

La réparation du défaut est assurée point par point par le laser, en ajustant l'apport d'énergie thermique en chaque point à la valeur sensiblement minimale requise pour la soudure. L'éloignement maximal des fibres du laser et l'apport minimal d'énergie nécessaire en chaque point évitent tout risque important de dégrader les fibres intérieures.

Cette réparation est faite sur l'étendue du défaut par déplacements successifs de faible amplitude du tube ou du laser l'un par rapport à l'autre, cette étendue étant en tant que telle limitée pour permettre la réparation. Ces déplacements sont exécutés selon la direction axiale du tube sur le chemin et de préférence également dans la direction transversale. A cet effet, l'ensemble 12 est avantageusement mobile dans ces deux directions et le laser fixe. En variante le laser peut être mobile et l'ensemble fixe, ou mobile dans l'une de ces deux directions.

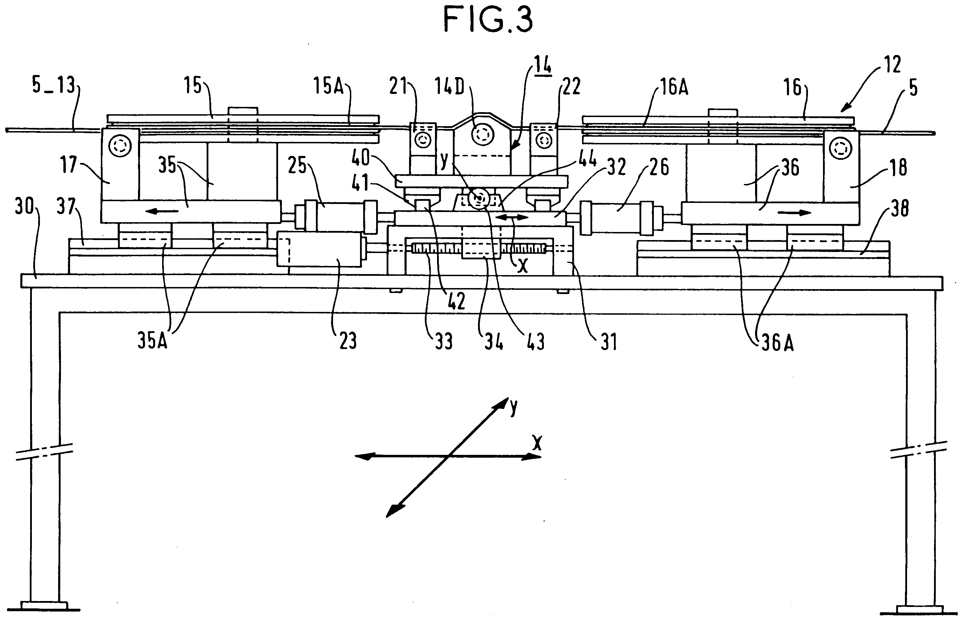

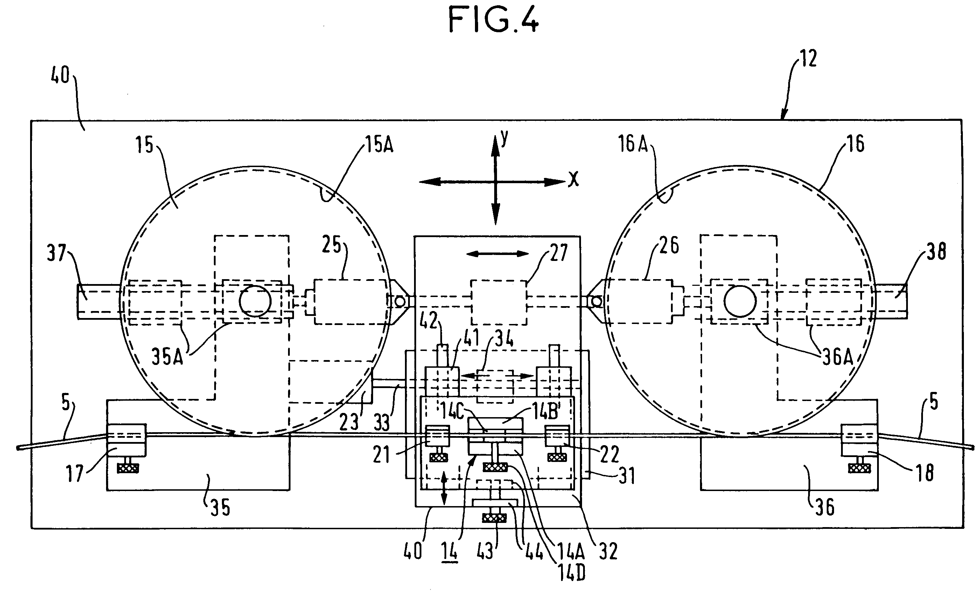

Un mode préféré de réalisation de l'ensemble 12 est précisé en regard des figures 3 et 4.

Dans l'ensemble 12, le moyen de cambrage 14 du tube est une pièce d'appui en deux parties, l'une fixe 14A et l'autre mobile 14B, pour une mise en place et le retrait plus aisés du tube sur sa face frontale en regard du laser, en assurant la tenue du tube quand la partie mobile est en position dite fermée. Il est constitué par un étau, dont la face frontale du mors fixe 14A est épaulée à l'opposé du mors mobile 14B. Ce mors mobile définit en position fermée avec le mors fixe une goulotte frontale 14C, de largeur sensiblement égale au diamètre du tube.

La goulotte est de forme globale convexe pour le cambrage du tube. Plus précisément sa partie médiane est plane et ses deux parties terminales de part et d'autre sont arquées. L'actionnement du mors mobile est assuré par une vis 14D.

Les deux moyens de guidage et de tension 15 et 16 sont deux poulies, présentant chacune une gorge périphérique 15A ou 16A recevant le tube. L'une ou de préférence les deux poulies sont mobiles en translation pour leur écartement l'une de l'autre et pour la tension résultante du tube entre elles sur l'étau 14.

Deux brides de guidage 17 et 18 sont associées aux poulies et montées de part et d'autre d'elles sur le chemin 13, et deux autres brides de guidage 21 et 22 sont associées à l'étau et montées de part et d'autre de l'étau. Ces brides garantissent le bon maintien du tube sur le chemin 13.

Dans l'exemple de réalisation illustré, les deux poulies sont d'axe vertical, pour des raisons de moindre encombrement. Elles s'étendent à l'arrière du chemin 13. En variante, elles peuvent être d'axe horizontal et s'étendent alors en dessous du chemin 13 alors au moins en grande partie au dessous de la trajectoire 6 de défilement direct du tube.

Le tube est mis en place sur les poulies, en lui faisant faire de préférence une boucle complète sur chacune d'elles pour éviter son glissement sur leur périphérie quand il est tendu par écartement des poulies l'une de l'autre. La largeur de la gorge est sensiblement double du diamètre du tube sur sa partie affleurant sur le chemin 13.

Un moteur pas à pas 23 assure le déplacement des poulies et de l'étau dans un sens ou l'autre sur le chemin 13, selon la direction X définie par le chemin. Deux vérins 25 et 26 sont associés aux deux poulies respectivement et assurent leur déplacement symétrique, pour leur écartement ou rapprochement.

Pour le maintien et le déplacement des poulies et de l'étau, l'ensemble 12 comporte un support principal fixe 30, dont la surface porteuse est horizontale, et un support auxiliaire 31 fixé sur le précédent et également à surface porteuse horizontale. Il comporte aussi une tablette motorisée 32, mobile sur le support auxiliaire et entraînée en X dans un sens ou l'autre.

Ainsi qu'illustré, pour la commande en translation de la tablette motorisée par un moyen de fixation 27, une vis filetée sans fin 33 est entraînée en rotation par l'arbre du moteur et entraîne en translation une crémaillère 34 montée en prise sur la vis et solidaire de la tablette motorisée.

Les deux vérins 25 et 26 sont solidaires de la tablette motorisée par un moyen de fixation 27 et s'étendent symétriquement d'un côté et de l'autre de cette tablette. Ces vérins sont dans cet exemple des vérins à commande électrique de préférence, ou par vis individuelle ou d'un autre type. Ils assurent la commande en translation des poulies, pour un même déplacement des poulies en sens contraire l'une de l'autre.

Les poulies 15 et 16 sont portées par des bras support 35 et 36, respectivement, qui sont directement entraînés en X par les vérins. Ces bras support portent également les brides de guidage 17 et 18. Ils sont montés mobiles en translation sur deux glissières 37 et 38 respectivement, portées par le support principal 30 et portent à cet effet des patins tels que 35A et 36A de guidage sur leur glissière.

L'étau 14 est quant à lui monté sur un plateau support 40. Ce plateau est porté par la tablette motorisée et est mobile en translation perpendiculairement au chemin 13, selon Y. A cet effet, deux patins tels que 41 sont solidaires du plateau et reçus sur deux glissières 42 qui sont solidaires de la tablette motorisée. Ce plateau est à déplacement micrométrique, assuré par une vis de commande 43, traversant un couple de pièces de liaison 44, non référencées séparément, l'une de ces pièces étant solidaire du plateau et entraînée par la vis et l'autre solidaire de la tablette et traversée librement par la vis.

Ce plateau 40 à déplacement micrométrique porte également les deux brides 21 et 22.

Le mors fixe 14A définit la semelle de l'étau et est fixé directement sur le plateau 40. Le mors mobile 14B s'ouvre ou se ferme relativement au mors fixe par la vis d'actionnement 14D.

Ce montage de l'étau et des poulies de l'ensemble 12 permet :
- par commande des deux vérins, la mise en tension du tube entre les deux poulies et sur l'étau pendant toute la durée de la réparation,
- par commande du moteur 23, le déplacement en X de l'ensemble et par là du tube en regard du laser fixe, pour la soudure à réaliser le long du défaut déplacé sous le laser,
- par actionnement de la vis 43, le déplacement en Y du tube sous le laser pour la soudure à réaliser sur la largeur du défaut.

Pendant la durée totale de la réparation le tube tendu est fixe sur les poulies. La réparation étant terminée, les vérins ramènent les deux poulies l'une vers l'autre, pour détendre le tube et permettre son retrait du chemin 13 et son entraînement sur la trajectoire 6 pour son stockage sur la bobine 3.

Ce mode de réparation selon l'invention évite toute modification dimensionnelle interne et/ou externe du tube et évite les risques d'endommagement des fibres pendant la soudure laser et après la réparation pendant le stockage du tube sur la bobine et les manipulations ultérieures. Ils permet un gain de temps important par rapport aux modes de réparation connus et l'obtention d'un tube de grande longueur, sans défaut et sans surdimensionnement interne ou externe localisé, pour son utilisation dans un câble obtenu directement de grande longueur.

## Revendications

1. Procédé de réparation d'un défaut de fermeture d'un tube métallique (5) contenant au moins une fibre optique de transmission, ledit défaut étant situé sur une génératrice dite de fermeture dudit tube (5), consistant à cambrer et mettre sous tension mécanique une portion dudit tube incluant ledit défaut, en rendant convexe la génératrice de fermeture pour forcer à ce niveau chaque fibre intérieure à se positionner contre ledit tube (5) à l'opposé dudit défaut, et à réaliser une soudure laser point par point sur ledit défaut, avec un apport d'énergie thermique en chaque point ajusté à la valeur sensiblement requise pour la soudure.

2. Ligne de réparation pour la mise en oeuvre du procédé selon la revendication 1, comportant deux postes (1, 2) de chargement d'une bobine émettrice (3) et d'une bobine réceptrice (4) dudit tube (5), respectivement, un moyen d'entraînement (7) dudit tube, selon une trajectoire (6) dite directe entre lesdites bobines, couplé à un ensemble de commande (8) d'avance et d'arrêt dudit tube sur ladite trajectoire, et un poste de réparation (10) monté décalé par rapport à ladite trajectoire (6) sur un chemin dévié dit de réparation (13), ledit poste de réparation (10) comportant un laser de soudure point par point (11) et un ensemble de conditionnement (12) du tube pour son cambrage et sa mise en tension mécanique en regard dudit laser.

3. Ligne de réparation selon la revendication 1, caractérisée en ce que ledit ensemble de conditionnement (12) comporte une pièce d'appui (14) dudit tube, présentant une face dite frontale de forme longitudinale sensiblement convexe (14C), et un premier et un deuxième moyen de guidage et de tension (15, 16) dudit tube, montés de part et d'autre de ladite pièce d'appui en définissant avec ladite pièce d'appui ledit chemin de réparation (13).

4. Ligne de réparation selon la revendication 3, caractérisée en ce que lesdits premier et deuxième moyens de guidage et de tension sont montés mobiles l'un relativement à l'autre sur ledit chemin de réparation, selon une direction X définie par ce chemin.

5. Ligne de réparation selon la revendication 4, caractérisée en ce qu'elle comporte en outre au moins un premier dispositif (25, 26) d'entraînement en translation selon la direction X, relié audit premier et audit deuxième moyen de guidage et de tension (15, 16).

6. Ligne de réparation selon la revendication 5, caractérisée en ce qu'elle comporte un premier support (32), dit tablette motorisée, couplé à un deuxième dispositif (23) d'entraînement en translation selon la direction X et portant d'une part lesdits premier et deuxième dispositifs (25, 26) montés fixes sur ladite tablette motorisée et d'autre part ladite pièce d'appui (14), et un deuxième support (30), dit support principal fixe, portant lesdits premier et deuxième moyens de guidage et de tension (15, 16) montés mobiles selon la direction X sur ledit support principal et portant également ladite tablette motorisée.

7. Ligne de réparation selon la revendication 6, caractérisée en ce que ledit support principal porte des glissières (37, 38) recevant des patins de guidage (35A, 36A) solidaires desdits moyens de guidage et de tension.

8. Ligne de réparation selon l'une des revendications 6 et 7, caractérisée en ce que ledit deuxième dispositif (23) est un moteur pas à pas.

9. Ligne de réparation selon l'une des revendications 6 et 8, caractérisée en ce qu'elle comporte en outre un troisième support (40) dit plateau, monté mobile selon une direction Y transversale à la direction X sur ladite tablette motorisée (32) et actionné selon la direction Y par un troisième dispositif (43) d'entraînement, ledit moyen de cambrage (14) étant porté et étant fixe sur ledit plateau.

10. Ligne de réparation selon la revendication 9, caractérisée en ce que ledit dispositif (43) est une vis d'entraînement micrométrique, montée traversante sur un couple de pièces (44) l'une solidaire dudit plateau et l'autre de ladite tablette motorisée.

11. Ligne de réparation selon l'une des revendications 9 et 10, caractérisée en ce que ledit plateau et ladite tablette motorisée sont équipés de moyens complémentaires (41, 42) de guidage dudit plateau sur ladite tablette.

12. Ligne de réparation selon l'une des revendications 3 à 11, caractérisée en ce qu'elle comporte en outre des moyens auxiliaires (17, 18, 21, 22) de guidage du tube sur ledit chemin de réparation, montés fixes au moins pour certains d'entre eux relativement à ladite pièce d'appui (14).

13. Ligne de réparation selon l'une des revendications 3 à 12, caractérisée en ce que lesdits premier et deuxième moyens des guidage et de mise en tension (15, 16) sont deux poulies ayant une gorge périphérique (15A, 16B) de réception sans glissement dudit tube.

14. Ligne de réparation selon l'une des revendications 3 à 13, caractérisée en ce que ladite pièce d'appui (14) est un étau ayant un mors fixe (14A), un mors mobile (14B) et une vis d'actionnement (14D) dudit mors mobile et présentant une goulotte convexe (14C) sur ladite face frontale définie par le mors mobile en position fermée contre le mors fixe.

15. Ligne de réparation selon la revendication 3, caractérisée en ce qu'elle comporte en outre un poste d'observation visuelle (9) du défaut, monté entre ladite bobine émettrice (3) et ledit poste de réparation (10).

16. Ligne de réparation selon la revendication 15, caractérisée en ce que ledit ensemble de commande (8) est couplé à une liaison extérieure (8A) de transmission de position de chaque défaut le long du tube sur la bobine émettrice (3).

17. Ligne de réparation selon la revendication 16, caractérisée en ce que ledit ensemble de commande (8) comporte au moins une entrée (8B, 8C) de validation et d'annulation de la réparation, activée par un opérateur à l'issue de l'observation de chaque défaut.

## Claims

1. Method of repairing a closure defect of a metal tube (5) containing at least one transmission optical fibre, said defect being situated on a closure generatrix of said tube (5), by bending and applying mechanical tension to a portion of said tube including said defect to make the closure generatrix convex to force each fibre inside it at this location to be positioned against said tube (5) on the side opposite said defect, and laser welding said defect point by point using heat input at each point adjusted to substantially the value required for the weld.

2. Repair line for implementing the method according to claim 1 including two loading stations (1, 2) for a feed spool (3) and a take-up spool (4) for said tube (5), means (7) for feeding said tube along a direct path (6) between said spools coupled to a system (8) controlling movement along and stopping of said tube on said path, and a repair station (10) offset relative to said path (6) on a repair path (13), said repair station (10) including a laser for welding said tube point by point (11) and a tube conditioning system (12) for bending the tube and applying mechanical tension to it opposite said laser.

3. Repair line according to claim 1 characterised in that said conditioning system (12) includes a support member (14) for said tube having a front face of substantially convex longitudinal shape (14C) and first and second means (15, 16) for guiding and tensioning said tube mounted on opposite sides of said support member and defining said repair path (13) with said support member.

4. Repair line according to claim 3 characterised in that said first and second guide and tensioning means are mobile relative to each other on said repair path in a direction X defined by said path.

5. Repair line according to claim 4 characterised in that it further includes at least one first device (25, 26) for feeding said tube in translation in the direction X connected to said first and second guide and tensioning means (15, 16).

6. Repair line according to claim 5 characterised in that it includes a first support (32) constituted by a motorised table coupled to a second device (23) for feeding said tube in translation in the direction X and carrying said first and second feed devices (25, 26) fixed to said motorised table and said support member (14) and a second support (30) constituted by a fixed main support carrying said motorised table and said first and second guide and tensioning means (15, 16) which are movable in the direction X on said main support and also carrying said motorised table.

7. Repair line according to claim 6 characterised in that said main support carries slideways (37, 38) receiving guide skids (35A, 36A) attached to said guide and tensioning means.

8. Repair line according to claim 6 or claim 7 characterised in that said second feed device (23) is a stepper motor.

9. Repair line according to claim 6 or claim 8 characterised in that it further includes a third support (40) constituted by a plate mobile in a direction Y transverse to the direction X on said motorised table (32) and actuated in the direction Y by a third feed device (43), said bending means (14) being carried by and fixed to said plate.

10. Repair line according to claim 9 characterised in that said third feed device (43) is a micrometer feed screw passing through a pair of members (44) one of which is attached to said plate and the other of which is attached to said motorised table.

11. Repair line according to claim 9 or claim 10 characterised in that said plate and said motorised table are provided with complementary means (41, 42) for guiding said plate on said table.

12. Repair line according to any one of claims 3 to 11 characterised in that it further includes auxiliary means (17, 18, 21, 22) for guiding the tube on said repair path at least some of which are fixed relative to said support member (14).

13. Repair line according to any one of claims 3 to 12 characterised in that said first and second guide and tensioning means (15, 16) are two pulleys having a peripheral groove (15A, 16B) for receiving said tube in a slip-free manner.

14. Repair line according to any one of claims 3 to 13 characterised in that said support member (14) is a vice having a fixed jaw (14A), a mobile jaw (14B), a screw (14D) for actuating said mobile jaw and a convex groove (14C) on said front face defined by the mobile jaw in the closed position against the fixed jaw.

15. Repair line according to claim 3 characterised in that it further includes a station (9) for visual observation of a defect between said feed spool (3) and said repair station (10).

16. Repair line according to claim 15 characterised in that said control system (8) is coupled to an external link (8A) for transmitting the position of each defect along the tube on the feed spool (3).

17. Repair line according to claim 16 characterised in that said control system (8) includes at least one input (8B, 8C) for enabling and cancelling repair, activated by an operator after observing each defect.

## Patentansprüche

1. Reparaturverfahren für Verschlußfehler eines Metallrohres (5), das wenigstens eine optische Übertragungsfaser enthält, wobei sich der Fehler auf einer festgesetzten Verschlußmantellinie des Rohres (5) befindet, das darin besteht, einen den Fehler enthaltenden Abschnitt des Rohres zu wölben und unter mechanische Spannung zu setzen, wobei die Verschlußmantellinie konvex wird, um in dieser Höhe jede innere Faser zu zwingen, sich dem Fehler gegenüber am Rohr (5) zu positionieren, und am Fehler eine Laserschweißung Punkt für Punkt mit einer Wärmeenergiezufuhr in jedem Punkt auszuführen, die auf den Wert eingestellt ist, der im wesentlichen für die Schweißung erforderlich ist.

2. Reparaturlinie zur Durchführung des Verfahrens nach Anspruch 1, die zwei Ladeplätze (1, 2) einer Vorratsspule (3) bzw. einer Aufwickelspule (4) für das Rohr (5), ein Mittel (7) zum Antreiben des Rohres in Übereinstimmung mit einer direkt zwischen den Spulen festgesetzten Bahn (6), das an einen Aufbau (8) zur Steuerung der Vorwärtsbewegung und des Anhaltens des Rohrs auf dieser Bahn gekoppelt ist, und einen Reparaturstand (10) aufweist, der in bezug auf die Bahn (6) auf einem festgesetzten verlagerten Weg (13) für die Reparatur abgesetzt angebracht ist, wobei der Reparaturstand (10) einen Laser (11) für die Schweißung Punkt für Punkt und einen Behandlungsaufbau (12) für das Rohr aufweist, um es gegenüber dem Laser zu wölben und unter mechanische Spannung zu setzen.

3. Reparaturlinie nach Anspruch 1, dadurch gekennzeichnet, daß der Behandlungsaufbau (12) ein Auflageteil (14) für das Rohr, das eine festgesetzte Stirnseite (14C) mit einer in Längsrichtung im wesentlichen konvexen Form und ein erstes und ein zweites Mittel (15, 16) zum Führen und Spannen des Rohes aufweist, die beiderseits des Auflageteils angebracht sind, wobei sie mit dem Auflageteil den Reparaturweg (13) definieren.

4. Reparaturlinie nach Anspruch 3, dadurch gekennzeichnet, daß die ersten und zweiten Mittel zum Führen und Spannen auf dem Reparaturweg in Übereinstimmung mit einer durch den Weg definierten Richtung X relativ zueinander beweglich angebracht sind.

5. Reparaturlinie nach Anspruch 4, dadurch gekennzeichnet, daß sie außerdem wenigstens eine Einrichtung (25, 26) zum Translationsantrieb in Übereinstimmung mit der Richtung X aufweist, die mit dem ersten und dem zweiten (15, 16) Mittel zum Führen und Spannen verbunden ist.

6. Reparaturlinie nach Anspruch 5, dadurch gekennzeichnet, daß sie einen ersten Träger (32), motorisierte Platte genannt, der an eine zweite Einrichtung (23) zum Translationsantrieb in Übereinstimmung mit der Richtung X gekoppelt ist und einerseits die ersten und zweiten Einrichtungen (25, 26), die fest auf der motorisierten Platte angebracht sind, und andererseits das Auflageteil (14) trägt, und einen zweiten Träger, fester Hauptträger genannt, aufweist, der die ersten und zweiten Mittel (15, 16) zum Führen und Spannen trägt, die auf dem Hauptträger in Übereinstimmung mit der Richtung X beweglich angebracht sind und auch die motorisierte Platte tragen.

7. Reparaturlinie nach Anspruch 6, dadurch gekennzeichnet, daß der Hauptträger Laufschienen (37, 38) trägt, die Führungsschuhe (35A, 36A) aufnehmen, die mit den Mitteln zum Führen und Spannen fest verbunden sind.

8. Reparaturlinie nach einem der Ansprüche 6 und 7, dadurch gekennzeichnet, daß die zweite Einrichtung (23) ein Schrittmotor ist.

9. Reparaturlinie nach einem der Ansprüche 6 und 8, dadurch gekennzeichnet, daß sie außerdem einen dritten Träger (40), Teller genannt, aufweist, der auf der motorisierten Platte (32) in Übereinstimmung mit einer Richtung Y quer zur Richtung X beweglich angebracht ist und Übereinstimmung mit der Richtung Y durch eine dritte Antriebseinrichtung (43) angetrieben wird, wobei das Mittel (14) zum Wölben auf dem Teller getragen wird und fest ist.

10. Reparaturlinie nach Anspruch 9, dadurch gekennzeichnet, daß die Einrichtung (43) eine Mikrometer-Antriebsschraube ist, die an einem Paar von Teilen (44) hindurchgehend angebracht ist, wobei eines mit dem Teller und das andere mit der motorisierten Platte fest verbunden ist.

11. Reparaturlinie nach einem der Ansprüche 9 und 10, dadurch gekennzeichnet, daß der Teller und die motorisierte Platte mit komplementären Mitteln (41, 42) zur Führung des Tellers auf der Platte ausgestattet sind.

12. Reparaturlinie nach einem der Ansprüche 3 bis 11, dadurch gekennzeichnet, daß sie außerdem Hilfsmittel (17, 18, 21, 22) zum Führen des Rohres auf dem Reparaturweg aufweist, die wenigstens für bestimmte von ihnen relativ zum Auflageteil (14) fest angebracht sind.

13. Reparaturlinie nach einem der Ansprüche 3 bis 12, dadurch gekennzeichnet, daß die ersten und zweiten Mittel (15, 16) zum Führen und Unter-Spannung-Setzen zwei Scheiben mit einer Umfangsrille (15A, 16A) zur Aufnahme des Rohres ohne Schlupf sind.

14. Reparaturlinie nach einem der Ansprüche 3 bis 13, dadurch gekennzeichnet, daß das Auflageteil (14) ein Schraubstock mit einer festen Spannbacke (14A), einer beweglichen Spannbacke (14B) und einer Antriebsschraube (14D) für die bewegliche Spannbacke ist und eine konvexe Rutsche (14C) an der Stirnseite aufweist, die durch die bewegliche Spannbacke in gegen die feste Spannbacke geschlossener Position definiert ist.

15. Reparaturlinie nach Anspruch 3, dadurch gekennzeichnet, daß sie außerdem einen Stand (9) zur visuellen Beobachtung des Fehlers aufweist, der zwischen der Vorratsspule (3) und dem Reparaturstand (10) angebracht ist.

16. Reparaturlinie nach Anspruch 15, dadurch gekennzeichnet, daß der Steueraufbau (8) an eine äußere Verbindung (8A) zur Übertragung der Position jedes Fehlers entlang des Rohres auf der Vorratsspule (3) gekoppelt ist.

17. Reparaturlinie nach Anspruch 16, dadurch gekennzeichnet, daß der Steueraufbau (8) wenigstens einen Eingang (8B, 8C) für die Validierung und Annulierung der Reparatur aufweist, der von einer Bedienperson am Ende der Beobachtung jedes Fehlers aktiviert wird.
